# EUROPEAN PATENT APPLICATION

(11) **EP 3 712 688 A1**
(43) Date of publication of application: **23.09.2020**
(21) Application number: 20164093.5
(22) Date of filing: 19.03.2020
(51) Int. Cl.: G02C 7/08, G02B 3/14

(54) **SYSTEM FOR EYE TRAINING AND USE OF THE SYSTEM FOR EYE TRAINING**

(30) Priority: 19.03.2019 EP 19163898
(71) Applicant: Optotune AG, 8953 Dietikon (CH)
(72) Inventor: ASCHWANDEN, Manuel, 6319 Allenwinden (CH)
(74) Representative: Schulz Junghans Patentanwälte PartGmbB

(57) **Abstract**

The invention relates to an eye training system (1) with the spectacles (10) that comprise at least the following components:
- A frame member (11) configured to keep the spectacles (10) on the head of a person wearing the spectacles (10),
- two optical assemblies (12) arranged at the frame member (11), wherein the optical assemblies (12) are arranged such at the frame member (11) that when the spectacles (10) are worn on the head of the person said optical assemblies (12) are in front of the eyes of the person, wherein each optical assembly (12) comprises a focus-tunable lens (13) with an adjustable focal length,
- a control circuit (22) comprising a processor, wherein the control circuit is configured to control the focal lengths of the focus-tunable lenses (13) in response to data (200) received from an external computer or provided by the processor.

The invention further relates to a method and a computer program for performing eye training with the eye training system (1).

## Description

The invention relates to a system for eye training comprising spectacles with adjustable focal length.

To prevent myopia or to restore vision with patients that have a vision disorder, eye training is used. To treat the issue, currently manual eye trainings are performed by flipping lenses with different focal power, i.e. different focal length in front of the patient's eye. This is a time-consuming expensive process requiring a trained person to execute the correct sequence of focal powers in repeating intervals or sessions.

An object of the invention is therefore to provide a system that allows for less demanding training requirements.

The current invention aims to solve this problem by providing an eye training system for training the eye of a person by adjusting or changing the focal length with focus tunable lenses arranged in front of the eyes of the person. The focus-tunable lenses can change their focal power upon the application of a particularly electric control signal and/or upon receiving a mechanical actuation force. The object is achieved by the device having the features of claim 1. Advantageous embodiments are described in the sub claims.

According to claim 1; an eye training system with the spectacles is provided, wherein the spectacles comprise at least the following components:
- A frame member configured to hold the spectacles on the head of a person wearing the spectacles,
- two optical assemblies arranged at the frame member, wherein the optical assemblies are arranged such at the frame member that when the spectacles are worn on the head of the person said optical assemblies are in front of the eyes of the person, wherein each optical assembly comprises a focus-tunable lens with an adjustable focal length,
- a control circuit comprising a processor, wherein the control circuit is configured to control the focal lengths of the focus-tunable lenses in response to data received from an external computer and/or the processor.

The spectacles may have a maximum weight of 120 grams, in particular the maximum weight of the spectacles is 50 grams.

The frame member is particularly configured to fix the spectacles on the head of the person wearing the spectacles. The frame member therefore serves the purpose of keeping the optical assemblies at the correct position in front of the eyes of the user.

The frame member can be made of rigid materials that are typically encountered on regular glasses, but it can also be made from an elastic, band-like material.

Furthermore, the frame member can comprise arms that are configured to hold the spectacles on the head in the correct position. Alternatively, the frame member may comprise an adjustable strap, which is arranged mount the spectacles on a person's head. In particular, the strap is exchangeable.

For example, the frame member has a width in a direction perpendicularly to the optical axis of the optical assemblies. In particular, the maximum thickness of the frame member is 5 mm, preferably 1 mm.

Moreover, the frame member comprises a forehead support. The forehead support is in direct contact with the forehead of a person wearing the frame ember. The forehead support defines the minimal distance between the eyes and the optical assemblies. In particular, the forehead support is exchangeable. For example, different forehead supports may define different minimal distances between the eyes and the optical assemblies. Furthermore, different forehead supports may have a different shape, in particular curvature, at a surface, which is in direct contact with the forehead. Thereby the interface at which the forehead and the frame member are in direct contact may be maximized. Thus, the forehead support may be selected to achieve an optimum distance between the eyes and the optical assemblies and to have a comfortable fit of the frame member to the forehead.

The two optical assemblies can be comprised, integrally formed, or attached to the frame member. Each optical assembly has an optical axis that in an ideal case is aligned with the pupils of the eyes of the person wearing the spectacles. In particular, the position of the optical assemblies with respect to the frame member may be adjusted. For example, the position of the optical assemblies is adjusted, to adjust the distance between the optical assemblies to the pupillary distance.

Each optical assembly comprises the focus-tunable lens that is configured to at least adjust its focal length upon provision of an actuation voltage or force.

Thus, the focal length of each optical assembly is adjustable by the focus tunable lenses comprised in the respective optical assembly. For example, each optical assembly may be arranged to tune the focal length in a range from -6 dpt to +4 dpt, preferably from -12 dpt to +12 dpt. In particular, the focal length of the optical assembly is adjusted continuously within the tuning range. For example, the focal length of the optical assembly may be adjusted with a speed of at least 20 dpt per second, preferably at least 40 dpt per second

The optical assemblies may have an aperture of at least 35 mm, preferably of at least 40 mm.

Several types of focus-tunable lenses are suitable for the eye training system. A first kind of focus-tunable lens is based on electro-wetting, where two immiscible fluids form a fluidic interface, wherein the contour of the interface is adjusted by applying varying electric fields via electrodes arranged at the lens to the liquids causing the focus tunable lens to adjust its focal length.

According to one embodiment of the invention, the focus-tunable lens is based on electro-wetting.

Another kind of focus-tunable lens is referred to as liquid crystal lens which focal length is adjustable by controlling and locally varying a refractive index of a fluid comprised by the lens.

According to one embodiment of the invention, the focus-tunable lens is a liquid crystal lens.

Yet a third kind of focus-tunable lens is based on an elastically deformable membrane. Such a membrane-based focus-tunable lens comprises a container with a transparent fluid and at least one membrane covering said container, wherein a curvature of the lens can be adjusted by controlling a pressure of the fluid comprised in the container leading to a deformation of the membrane and thus to a change of focal length.

These membrane-based focus-tunable lenses are particularly robust and well controllable.

The term "focus-tunable lens" particularly refers to a focus-tunable lens comprised by the kinds of focus-tunable lens described above.

The data for controlling the focal length and particularly other control parameters of the spectacles, such as cylinder or prism, or shutter state, filter state or polarizer state, can be received by the spectacles wireless or by means of a data wire.

For this purpose, the spectacles can comprise a receiver configured to receive the data either via a data cable connecting the spectacles with the external computer and/or wireless from an external computer, and particularly to transmit data back to the external computer.

The data can also be provided by the processor that is integrated in the spectacles, particularly in the control circuit. In particular, the control circuit may comprise an input element, which is arranged to receive an input provided by a user. The input element may be a joystick or a touchpad.

Thus, the system allows to execute eye training either by use of the spectacles only by using the processor for providing the data or by use of the external computer.

The spectaculars may comprise a filter or a prism, which is mounted on the frame member, wherein light passing through at least one of the optical assemblies passes through the filter or prism. The filter may be selectively transparent for green or red light. For example, the filter and/or prism are mounted on the frame member by means of a clamping connection. In particular, the clamping connection comprises a magnet, which provides e mechanical connection between the filter and/or prism and the frame member.

The eye training system can comprise a radio module configured to wirelessly receive data from an external computer, particularly wherein the data is configured to control the focal length of the optical assemblies. The radio module is particularly also configured to transmit data to the external computer or other devices particularly for monitoring reasons.

The radio module is particularly configured to establish a wireless digital communication with the external computer. Such digital communication can be based for example on well-known standards such as Bluetooth, Wi-Fi or other near field communication (NFC) protocols. The radio module therefore comprises electronic circuits that are capable to communicate at least with one such communication protocol.

The radio module can be arranged particularly on or in the frame member and is electrically connected to an energy source configured to provide the radio module with electric energy.

The terms "computer" and "processor", or system thereof, is used herein as ordinary context of the art, such as a general-purpose processor or a micro-processor, RISC processor, or DSP, possibly comprising additional elements such as memory or communication ports. Optionally or additionally, the terms "computer" and "processor" or derivatives thereof denote an apparatus that is capable of carrying out a provided or an incorporated or provided computer program and/or is capable of controlling and/or accessing data storage apparatus and/or other apparatus such as input and output ports. The terms 'computer' and processor particularly denote also a plurality of processors or computers connected, and/or linked and/or otherwise communicating, possibly sharing one or more other resources such as a memory. Moreover, the term "computer" comprises also computerized devices.

The term "computerized device" or a similar term denotes an apparatus comprising one or more processors operable or operating according to one or more programs.

A mobile computerized device (also referred to as mobile device) is a small computer, particularly small enough to hold and operate in the hand and having an operating system capable of running mobile apps - software applications designed to run on mobile devices. A mobile device is therefore a computerized device that is portable and weights particularly less than 2000 g.

A mobile computerized device, such as a mobile phone, a smart phone, a smart watch, or a tablet computer, particularly comprises at least one processor, the so called CPU (central processing unit). The mobile device comprises a display screen with a small numeric or alphanumeric keyboard or a touchscreen configured to provide a virtual keyboard and buttons (icons) on-screen. The mobile device is particularly configured to connect to the Internet and interconnect with other computerized devices and the radio module via Wi-Fi, Bluetooth or NFC.

The data transmitted by the external computer is received by the radio module or the spectacles and processed by the control circuit. Alternatively, or additionally the data are provided by the processor of comprised by the spectacles. The data particularly comprise control instructions for the control circuit or information about control parameters such as an output voltage of the control circuit for the focus tunable lenses.

The particularly electric and electronic control circuit is configured to control the focal lengths of the focus-tunable lenses according to the received data, particularly by generating control signals corresponding to the information comprised in the received data.

The control circuit is particularly configured to control the focal length of each optical assembly individually, i.e. independently from each other. The radio module and the control circuit can be comprised in a single unit.

The computer is particularly arranged and/or located externally from the spectacles. The term "external" in context with the computer particularly refers to the fact that the computer is a different entity or unit from the spectacles, that is the computer is particularly not wearable or worn in conjunction with the spectacles on the head of a user, i.e. the computer is not or not rigidly attached to the spectacles, but particularly only via a data cable.

In contrast, the processor for providing said data is incorporated in the spectacles.

According to one embodiment, the eye training system comprises a feedback element. The feedback element may be a loudspeaker or a headphone, which provides acoustic feedback, in particular to the person wearing the spectaculars. Alternatively, the feedback element may be arranged to provide a haptic feedback by means of a vibration signal.

According to one embodiment, the eye training system comprises a speech recognition unit, which allows to control the eye training system by means of verbal signals. The verbal signal may be provided by the person wearing the spectacles.

According to one embodiment, the eye training system comprises a monitoring mechanism, which monitors the correct operation of the eye training system. In particular, the monitoring mechanism prevents cheating of a person, who uses the eye training system. For example, the monitoring mechanism is arranged to perform voice recognition. Thus, the person using the eye training has to verbalize information. Thereby a randomized answer, for example by selection of random answers on a touch screen, is prevented. The monitoring mechanism may comprise eye tracking cameras, which make sure that the sight of a person using the eye training system passes through the optical system. Thus, a fault use of the eye training system, by looking sideways passed the optical system, is detected and prevented. The monitoring mechanism may be based on haptic feedback, wherein the person using the eye training system is required to touch a touch pad, a touch screen or a button in a predetermined location. Thus, it is required for a person using the eye training system to have a certain amount of hand eye coordination, which prevents randomized input from the person using the eye training system.

The system according to the invention allows eye training in an automated fashion without the need of a supervising person that flips and switches lenses with fixed focal lengths in order to execute such an eye training.

The computer-controlled eye training system moreover allows to use lighter spectacles and reduces a potential error rate caused by accidently switching lenses with the wrong focal length during eye training.

Moreover, as the eye training system is configured to be controlled by an external computer or the processor, predefined sequences can be executed with such a system in parallel and error-free for a plurality of persons wearing the spectacles with focus tunable lenses such that eye training can be executed simultaneously.

The computer-controlled eye training system according to the invention, also allows for use at home or away from an eye training specialist.

The person training its eyes can control the spectacles with its own computer, provided a suitable software is provided to the computer.

Alternatively, the spectacles comprise an interface, such as a button, configured to start an eye training program stored on the spectacles, particularly stored on a memory storage comprised by the spectacles. In particular, the spectacles may comprise multiple preprogrammed exercises stored on the memory storage.

According to another embodiment of the invention, a computer program for executing an eye training is stored on a memory storage comprised by the spectacles, wherein upon execution of the computer program by the processor, the computer program provides the training sequences in form of a computer program code and the processor generates data for adjusting the focal length according to the training sequence.

According to another embodiment of the invention, a computer program for executing an eye training is stored on an external computer, wherein upon execution of the computer program by the external computer, the computer program provides the training sequences in form of computer program code and the external computer generates and transmits the data for adjusting the focal length according to the training sequence to the spectacles for execution.

According to another embodiment of the invention the spectacles, particularly the control circuit comprises memory storage for storing data particularly received by an external computer. Moreover, the memory storage can store training data collected during eye training for later or immediate analysis. Such training data can be transmitted via the radio module to the external computer for evaluation. For example, the data collected during eye training comprises the measured "time to clear", "number of iterations" and/or "optical power range". Here and in the following, "time to clear" is the measured time span, which a patient requires to accommodate to a condition defined by the eye training system. Here and in the following, "number of iterations" is the number of correct feedback iterations a patient is able to give within a predefined time span. Here and in the following, "optical power range" is the range of optical power, within which the patient is able to accommodate to a condition defined by the eye training system.

The computer or the processor is particularly configured to provide feedback for training such as to open or close a shutter of the optical assembly. The shutter may be actuated electronically. In particular, the shutter may comprise a liquid crystal, which may become opaque by means of an electric signal.

Furthermore, the shutter may be an optical occlude. The occlude may be diffusely translucent. Thus, a person who performs an eye training may not see through the occlude. However, the eye which covered by the occlude is still exposed to ambient light. Furthermore, a person supervising the person who performs an eye training, may determine the direction into which the eye is directed, while the eye is covered by the occlude.

According to another embodiment of the invention, the eye training system further comprises the external computer, wherein the external computer is configured or comprises means to wireless transmit, e.g. via a server or directly, the data to the spectacles.

According to another embodiment of the invention, the eye training system comprises a computer program stored particularly on a memory storage of the external computer or the processor, wherein the computer program is configured to receive a user input via an interface, such as a touch-screen, a button or switch on the spectacles, a camera, a keyboard or a microphone, wherein the interface is configured to allow a person, such as the spectacles wearer or eye-trainer personnel, to independently or dependently adjust the focal lengths of the focus-tunable lenses of the optical assemblies and/or to allow the person to start a particularly predefined temporal sequence of focal lengths to be adjusted at the spectacles, particularly wherein the computer program is further configured to cause the external computer to transmit the data to the spectacles. Furthermore, the person can also provide feedback such as when he sees a specific target in focus.

This embodiment allows for executing eye-training is a convenient manner by means of a computer program.

According to another embodiment of the invention, at least one of optical assemblies, particularly both optical assemblies each, comprise(s) a shutter configured to alter a transmission of the at least one optical assembly, particularly between essentially 0% and 100% transmission, particularly wherein the shutter or each shutter is configured to adopt a first state, such as a first position or a first orientation, and a second state, such as a second position or a second orientation, wherein in the first state the optical assembly comprising the shutter is transparent and wherein in the second state the optical assembly comprising the shutter is optically shut, that is opaque, particularly wherein the shutter is a mechanical shutter that can be actuated manually.

This embodiment allows focusing eye training on one eye only by shutting the respective other optical assembly with the shutter.

According to another embodiment of the invention, the at least one shutter, particularly both shutters each, is or are controlled by the control circuit particularly with an electric actuator arranged at the shutter, particularly wherein the data from the external computer or the processor is configured to control the shutter via the control circuit.

This embodiment allows for remote and automatic control of the shutter, such that a shutter state (e.g. first or second state) can be incorporated as part of an eye training sequence provided with the data, particularly coded in the computer program that controls the spectacles.

According to another embodiment of the invention, at least one optical assembly, particularly both optical assemblies each, comprise(s) a first adjustable optical polarizer configured to adjust a polarization of light transmitted by the optical assembly. In particular, each optical assembly comprises a polarizer, wherein one polarizer is arranged to transmit light having a polarization of 45° and the other polarizer is arranged to transmit light having a polarization of 135°.

The first polarizer can be configured to be operated manually.

For this purpose, the first polarizer can have a lever that allows the polarizer to be manually operable.

According to another embodiment of the invention, at least one of the optical assemblies, particularly both optical assemblies each, comprise(s) a second particularly adjustable optical polarizer, wherein the first and the second polarizer form the shutter. In particular, the shutter is formed by linearly polarized liquid crystal elements. These elements may be operated by digital voltage levels of 0 V and 5V at a frame rate of 60 Hz, preferably 1 Hz.

The shutter function can be achieved by orienting the polarization planes of the two polarizers such that they are orthogonal or aligned with each other. For this purpose, at least one, particularly the first polarizer is rotatably arranged in the at least one optical assembly.

The first and/or the second polarizer can be configured to be operable manually or remotely as disclosed in the previous embodiments.

This embodiment furthermore allows for intermediate transmission values of the shutter between 0% and 100% by appropriate polarizer orientations.

Alternatively, the polarizer may be operated electrically. Thus, the polarizer may be automated by an electric signal, which is provided by the computer.

According to another embodiment of the invention, the at least one shutter comprises the first polarizer, the second polarizer and a liquid crystal layer, arranged between the polarizers, particularly wherein the first and the second polarizer are fixed, i.e. non-rotatably mounted on the spectacles, particularly the optical assemblies.

The liquid crystal layer allows to rotate the polarization of the light passing through and therefore to control the amount of light transmitted through the first /or the second polarizer.

According to another embodiment of the invention, the first polarizer is controlled by the control circuit particularly with an electric actuator arranged at the first polarizer for adjusting the polarization of the transmitted light, particularly wherein the data is configured to control the first polarizer via the control circuit.

The actuator for the first polarizer and the shutter can be different actuators or the same.

The actuator is particularly configured to rotate the polarizer around its optical axis or to rotate the polarizer around an external axis that lies outside the polarizer such that a lateral movement of the polarizer in and out of the optical path of the optical assembly can be achieved.

According to another embodiment of the invention, each of the focus-tunable lenses is a membrane-based lens, wherein the membrane-based lens comprises a container that is transparent at least along an optical axis of the optical assembly, the container comprises a first and a second face arranged essentially opposite of each other and particularly perpendicular to the optical axis of the optical assembly, wherein the container comprises a transparent liquid between the first and the second face and wherein at least the first face of said container comprises a transparent elastically deformable, particularly stretchable, membrane for adjusting the focal strength of the focus-tunable lens.

This embodiment allows for a robust and durable eye training system.

According to another embodiment of the invention, the focus-tunable lens of each optical assembly is a coma-compensated lens.

Gravity induced coma is a well-known problem of liquid lenses, particularly in comparably large liquid lenses, as for example used in the spectacles.

Such coma-compensated lens for example comprises
- a first chamber filled with a first transparent liquid comprising a first mass density and a first refractive index,
- a second chamber filled with a second transparent liquid comprising a second mass density and a second refractive index, and
- a transparent and elastically deformable first membrane that separates the two chambers from one another and contacts the first liquid and the second liquid, wherein said mass densities and said refractive indices are selected such that a gravity-induced coma aberration of the lens is reduced or prevented.

According to one embodiment of the coma-compensated lens, the first membrane forms on a surface facing the first liquid at least a convex section and at least a concave section, when the optical axis of the lens is in a horizontal position, the mass densities and the refractive indices of such a coma-compensated focus tunable lens are particularly selected such that the gravity induced coma aberration of the lens is reduced or prevented independent of an orientation of the optical axis of the lens.

For example, the first mass density is smaller than the second mass density, and the first refractive index is larger than the second refractive index or vice-versa.

According to another embodiment of the invention, the coma-compensated focus-tunable lens comprises a second transparent and elastically deformable membrane, wherein the second membrane faces the first membrane.

According to another embodiment of the invention, the spectacles comprise an actuator system configured and arranged to adjust the focal lengths of the focus tunable lenses of the optical assemblies, particularly wherein the actuator system comprises an actuator for each optical assembly, wherein the actuator system comprises at least one of:
- An electromagnetic actuator, such as a voice coil actuator, comprising an electromagnet or an electro permanent magnet;
- A piezoelectric actuator or a piezo motor;
- A stepper motor;
- A magneto strictive actuator;
- An electrostatic actuator;
- An electroactive polymer actuator.

This embodiment allows for a variety of different actuator types. These actuators can be operated well with the control circuit. The actuator system is electrically connected to the control circuit and is controllable by the control circuit.

The actuators allows for example to control a pressure inside the container of the membrane-based focus-tunable lens. When the pressure is increased the elastically deformable membrane of the focus-tunable lens changes its shape and particularly its curvatures according to the pressure, which allows to adjust to focal length of the focus-tunable lens with the actuator.

According to another embodiment of the invention, each membrane-based focus-tunable lens has an associated actuator for adjusting the focal length of the focus-tunable lens.

According to another embodiment of the invention, the actuator system, particularly each actuator, is comprised in the optical assemblies. For this reason, the actuator system is particularly small in order to provide a maximized field of view to the user of the spectacles.

According to another embodiment of the invention, the spectacles comprise a power source, such as a battery, wherein the power source is configured to provide electric energy to the spectacles, particularly to the optical assemblies, the control circuit, the radio module, and/or the actuator system with energy.

The power source is for example arranged at a portion of the frame member that is located at the back or the side of the head.

The power source is particularly comprised inside the frame member in order to minimize bulk components sticking out of the frame member for increased wearing comfort.

According to another embodiment of the invention, the spectacles comprise an adjustment assembly for adjusting particularly a lateral distance between the optical assemblies.

This embodiment allows for aligning the optical axes of the optical assemblies with the eye pupils of a person wearing the spectacles for better fit.

This embodiment allows for adjusting the pupillary distance for example to fit children's heads.

The adjustment assembly particularly comprises a control wheel comprised in the frame member and wherein the wheel is configured to be operated manually by rotating the wheel for adjusting the distance between the optical assemblies.

According to another embodiment of the invention, the spectacles comprise a distance sensor configured to measure a distance to an object in front of the spectacles.

This allows for eye training in combination with objects that are to be brought in a predefined distance for viewing, such like books or tablets. The system is particularly configured to receive the object distance data from the spectacles on the external computer, and is configured to provide either a feedback (e.g. via a screen of the external computer) to the person wearing the spectacles, such that the person can adjust the object distance and/or to adjust the focal length of the optical assemblies.

Furthermore, the eye training system may provide two separate feedback systems, wherein the feedback systems provide different information. For example, one feedback system provides information to the person wearing the spectacles and the other feedback system provides information to the person supervising the eye training.

Thus, the estimated object distance data can particularly be processed by the eye training system such that a focal length is adjusted in response to the estimated object distance.

The distance sensor is for example a time of flight sensor, an ultra-sound sensor, a camera or a 3D-image sensor.

According to another embodiment of the invention, the focus-tunable lenses are comprised in a glass or a transparent polymer laterally surrounding the focus-tunable lens. The glass or the polymer is particularly part of the optical assembly. This evokes a more natural glasses-like impression for allowing a discrete use of the eye training system.

According to another embodiment of the invention, the spectacles, particularly each optical assembly, comprise an imaging device such as a camera, arranged such on the spectacles that the imaging device can record the eye of a person wearing the spectacles.

From the recorded eye, eye movements, such as for example pupil position data, pupil size, pupil tracking and eye ball rotation, tracking of macro and micro motions of eye ball and/or pupil, speed of pupil size change, focal length of the eye lens, size and/or position of eye lid or eye lid closing speed can be extracted, and particularly transferred to the external computer for evaluation purposes or stored on a memory storage particularly on the spectacles or on the external computer.

The eye training system is particularly configured to adjust the focal length in response to data provided by the imaging sensor. Moreover, the focal length or the change of focal length of the focus-tunable lens can be correlated with the recorded data and self-learning artificial intelligence algorithms can be applied to interpret the data and optimize the training. Additionally, the person wearing the device can provide a feedback signal to the external computer that an object appears in focus to him/her, such that the recorded eye and the feedback signal can be evaluated on the external computer. Such evaluation can for example be done by means of an artificial intelligence method, such as an artificial neural network or the like that allows to provide an improved eye training.

According to another embodiment of the invention, each focus-tunable lens is configured to also adjust for astigmatism or prism.

This embodiment allows for individually adapt to more complex eyesight problems and more complex eye trainings. Furthermore, the lens of the eye training systems can be used as correction lenses for the user.

According to another embodiment of the invention, the eye training system, particularly the frame member, is designed such that it fits over glasses worn by the user. For example, the distance between the optical assemblies and the eyes is in a range from 3 cm to 10 cm.

According to another embodiment of the invention, corrective lenses can be particularly releasably mounted on the eye training system via mechanical clipping, gluing or magnetic mounting.

According to another embodiment of the invention, each focus-tunable lens comprises a prism for adjusting the light path of transmitted light through the respective optical assembly. For example, the prism is arranged to adjust the optical path of light passing through the optical assembly by 5°, 10° or 20°.

This embodiment allows particularly for an alignment or misalignment of the optical axes of the optical assemblies with the optical axes of the eyes of the person wearing the spectacles and with this for new training methods.

The adjustable prism is particularly also controllable by the data provided by the external computer or the processor, particularly by means of the actuator system.

According to another embodiment of the invention, each optical assembly comprises a rigid corrective optical element, such as a lens, particularly a cylindrical lens.

According to another embodiment of the invention, at least one of the optical assemblies comprises a cylindrical lens.

According to a further embodiment of the invention, said cylindrical lens is movable, removable, particularly repeatedly releasably arrangeable to the optical assembly.

The cylindrical lens can be used to compensate for an astigmatism of the person wearing the spectacles.

The problem according is also solved by a use of the training system according to the invention for remote-controlled eye training, the eye training comprising the steps of:
- The optical assemblies receiving data from the external computer and/or from the processor, wherein the data cause the optical assemblies to adjust the focal length, the transmission, and/or the polarization,
- Particularly providing the data in predefined time intervals to the optical assemblies by the external computer and/or by the processor such that a predefined eye training program is executed.

According to another embodiment of the invention, the method further comprises the steps of recording eye data with the image sensor on the spectacles, particularly wherein the eye data are transmitted, particularly in real time, by the radio module to the external computer.

According to another embodiment of the invention, the transmitted eye data are evaluated together with the data provided for adjusting the focal length of the focus-tunable lenses, wherein form the evaluation it is determined whether an object in front of the person has been in focus for the person wearing the spectacles.

According to another embodiment of the invention, a feedback signal is provided to the external computer and/or the processor by the person wearing the spectacles, when an object arranged in the field of view of the person appears in focus to the person.

According to another embodiment, said feedback signal is evaluated together with the data for controlling the focal length at the spectacles and/or the eye data on the external computer and/or processor.

According to another aspect of the invention, the problem is solved by a method or a computer program for performing an eye training with data recorded from the eye training system according to the invention, wherein the recorded data particularly comprise data recorded with the imaging device, particularly wherein the recorded data are received and evaluated by the external computer and/or the processor, wherein in response to the recorded data the external computer and/or the processor generates and transmits data to the optical assemblies such as to adjust at least one of:
- a focal length, a cylinder or a prism of at least one focus-adjustable lens,
- a shutter state of at least one optical assembly (12),
- a polarizer state of at least one optical assembly (12).

The method allows for correlating the eye training with the recorded data from a user.

The problem according to the invention is also solved by a computer program for controlling the adjustable focal lengths of the spectacles of the eye training system according to the invention, wherein the computer program comprises computer program code that when executed on the external computer or the processor causes the external computer or the processor to transmit data to the optical assemblies that cause the focus-adjustable lenses to adjust the focal length.

For the use of the eye training system and the computer program definitions of terms and expressions given in the context of the eye training system according to the invention apply and vice versa.

Specifically, method aspects and configurations of the eye training system disclosed in the specification are explicitly meant to be optional method steps or computer program aspects.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

It is shown in
Fig. 1 a first embodiment of the eye training system according to the invention;
Fig. 2 an exploded view of the first embodiment of the eye training system;
Fig. 3 another exploded view of an embodiment of the eye training system with a cylindrical lens;
Fig. 4 a second embodiment of the spectacles for the eye training system, comprising eye tracking cameras;
Fig. 5 a third embodiment of the spectacles for the eye training system; and
Fig. 6 an exploded view of the third embodiment of the spectacles.

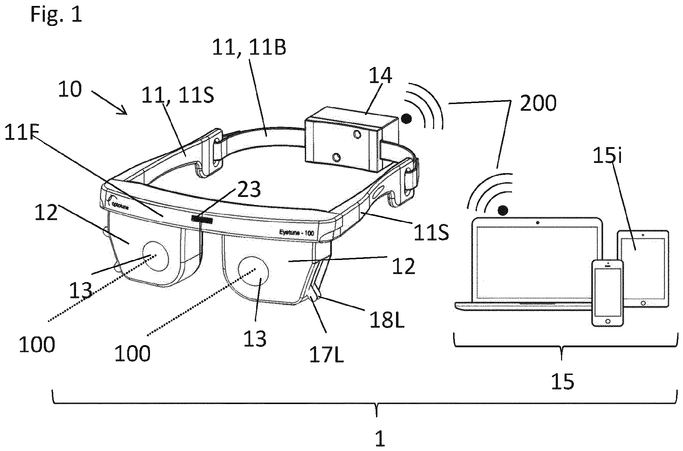

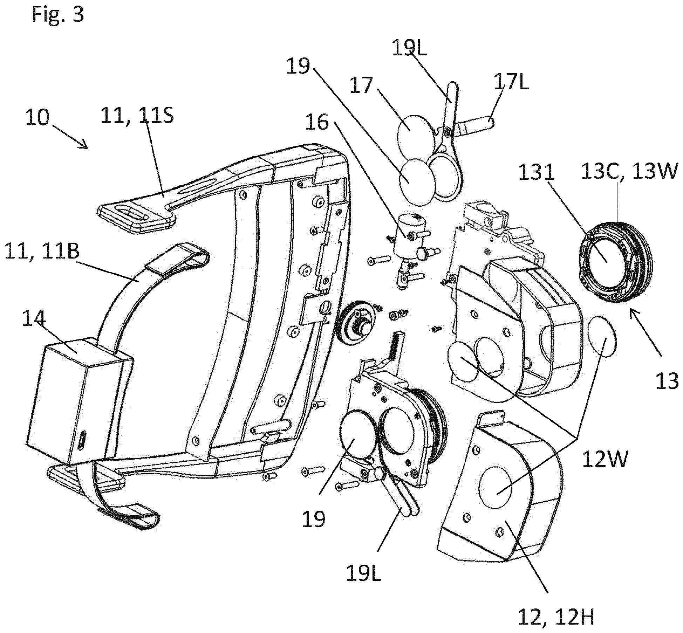

In Fig. 1 to Fig. 2 a first exemplary embodiment of the eye training system 1 according to the invention is shown. Fig. 3 shows a slight variation of the first embodiment. The eye training system 1 comprises a pair of spectacles 10 and an external computer 15. The external computer 15is depicted in Fig. 1 as a laptop, a smart phone or a tablet computer. The spectacles 10 comprise a frame member 11 for wearing the spectacles 10 on the head of a user. The frame member 11 therefore is designed similar to frame members of known glasses. At the frame member 11 two optical assemblies 12 each comprising a focus-tunable lens 13 are arranged such that when the spectacles 10 are worn by a person, the focus-tunable lenses 13 are arranged in front of the eyes of the person.

The frame member 11 comprises two arms 11S that that extend sideways of the head of the person wearing the spectacles 10. Furthermore, at the end of the arms 11S of the frame member 11 a length-adjustable back portion/strap 11B is arranged for fitting the spectacles 10 to the head of the person. At the back portion 11B a housing 14 for several components of the spectacles 10 are arranged. These components comprise a radio module (not visible) configured to receive and transmit data from or to the external computer 15and a power source (not shown) in form of a battery. The battery provides the necessary electrical energy to the components of the spectacles 10.

The frame member 11 comprises the forehead portion 11F at which the two optical assemblies are arranged. The forehead portion 11F further comprises a bridge portion configured to fit around the nose of the person. Left and right of said bridge portion the optical assemblies 12 are arranged. The bridge portion comprises a turning wheel 23 configured to adjust a lateral distance between the two optical assemblies 12 such that an optical axis 100 (indicated as a dotted line) of each optical assembly 12 can be aligned with the optical axis of the eye of the person wearing the spectacles 10. For this purpose, the optical assemblies 12 are mounted movable along the forehead portion 11F of the frame member 11.

Inside the frame member 11, particularly at the forehead portion 11F of the frame member 11 a control circuit (not visible) configured to control the focal length of the focus-tunable lenses 13 of the two optical assemblies 12 is arranged. The control circuit is connected to the radio module as well as to the battery in the housing.

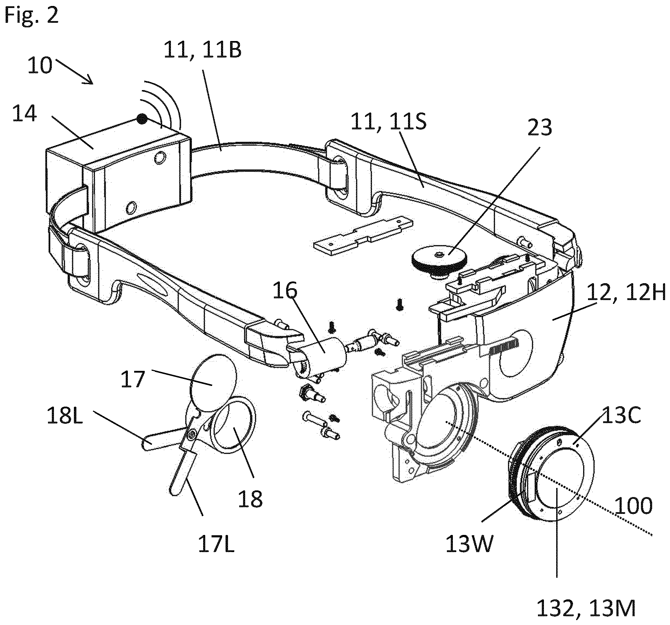

As can be seen in the partially exploded view of Figs. 2 and 3, the optical assembly 12 and the forehead portion 11F of the frame member comprise several components for controlling the focus-tunable lens 13 in the optical assembly 12. The focus-tunable lens 13 in this embodiment is a membrane-based focus-tunable lens. The focus-tunable lens 13 comprises a container 13C with a first transparent face 131 facing towards the eye of the person and a second transparent face 132 opposite the first face 131. The container 13C comprises a container wall 13W connecting the two faces 131, 132 enclosing a container volume filled with a transparent liquid. The second face 132 comprises an elastically deformable, particularly stretchable liquid tight membrane 13M, wherein said membrane 13M forms a surface of the focus-tunable lens 13. By adjusting the pressure of the liquid inside the container volume the curvature of the membrane 13M can be adjusted and thus the focal length of the lens 13.

In order to adjust the pressure of the liquid inside the container 13C, an actuator 16, here in form of a stepper motor, is arranged at the forehead portion 11F of the frame member 11, wherein said stepper motor is configured to actuate the focus-tunable lens 13 such that the pressure inside the container 13C is adjusted and the focal length is changed as the membrane 13M changes its curvature in response to the adjusted pressure. By using a focus tunable lens that can not only adjust its spherical power but also cylinder and prism, higher order effects can be introduced to the membrane. Each optical assembly 12 comprises such a stepper motor, such that the focus-tunable lenses 13 can be adjusted independently from each other.

In the exemplary embodiment shown in Fig. 1 and 2 each optical assembly 12 comprises a shutter 17 and at least one optical assembly 12 comprises a polarizer 18 arranged in between the user's eye and the focus-tunable lens 13. Both, the shutter(s) 17 and the polarizer(s) 18 have a mechanical adjustment lever 17L, 18L that is manually operable, such that the shutter 17 and the polarizer 18 can be arranged independently in a first position outside a line of sight of the person, or in a second position on the optical axis 100 of the focus-tunable lens 13 such that the optical assembly 12 can be optically shut (with the shutter 17 in the second position) or only light having a specific polarization is transmitted by the optical assembly 12 (with the polarizer 18 in the second position).

In Fig. 3 it can be seen that the focus-tunable lenses 13 are comprised in a housing 12H that has protective windows 12W on a back and front side of the housing 12H. The protective windows can be flat, or they can have a corrective optical power including spherical or cylindrical power. Moreover, the polarizer 18 shown in Fig. 2 is replaced a cylindrical lens 19 for compensating an astigmatism of the person wearing the spectacles 10. The cylindrical lens 19 is also, similarly to the polarizer 18, mounted on a mechanical adjustment lever 19L that is manually operable such that the cylindrical lens 19 can be flipped in front of the user's eye or out of the line of sight.

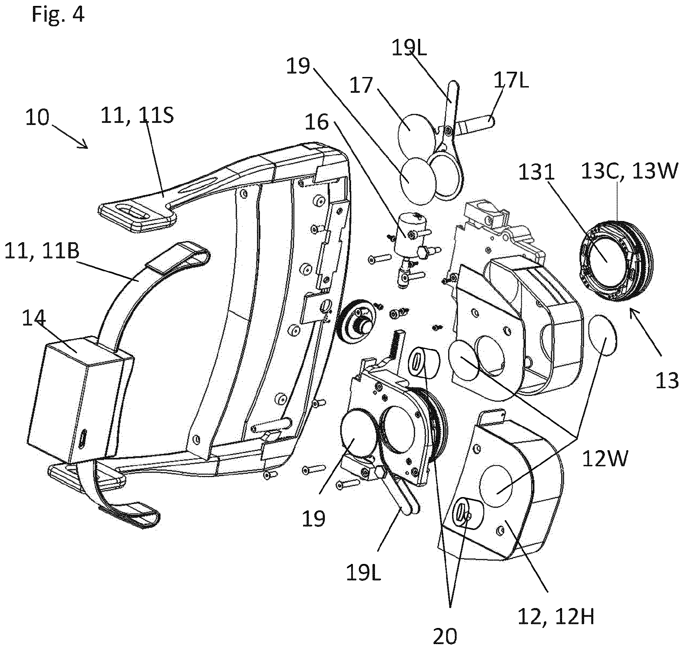

In addition to the previous embodiments shown in Fig. 1 to 3, the embodiment shown in Fig. 4 comprises additional illumination and cameras 20 arranged at the optical assemblies 12 for recording the eye of the person wearing the spectacles. The cameras 20 record the eyes, particularly the pupils and are configured to track the eyes/lid and the eye/lid movements. The recorded eye data from the cameras 20 can be transmitted by the radio module to the external computer 15for evaluation of the eye data particularly in connection with the data for controlling the focal length and optionally with a feedback signal provided by the person wearing the spectacles, wherein said feedback signal is indicative that an object in the field of view of the person appears in focus to the person.

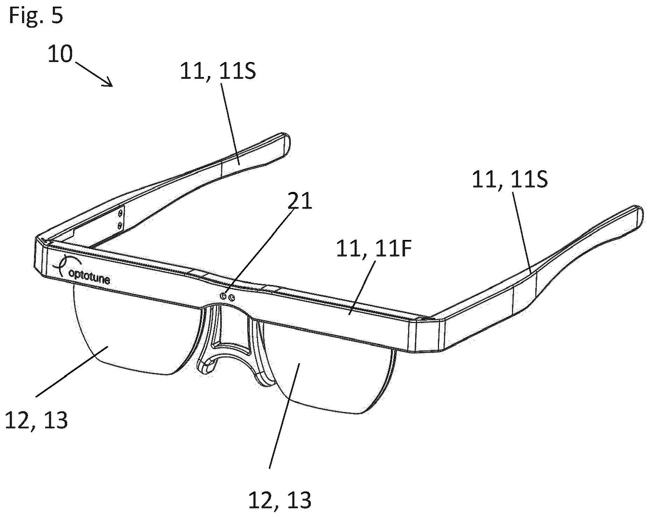

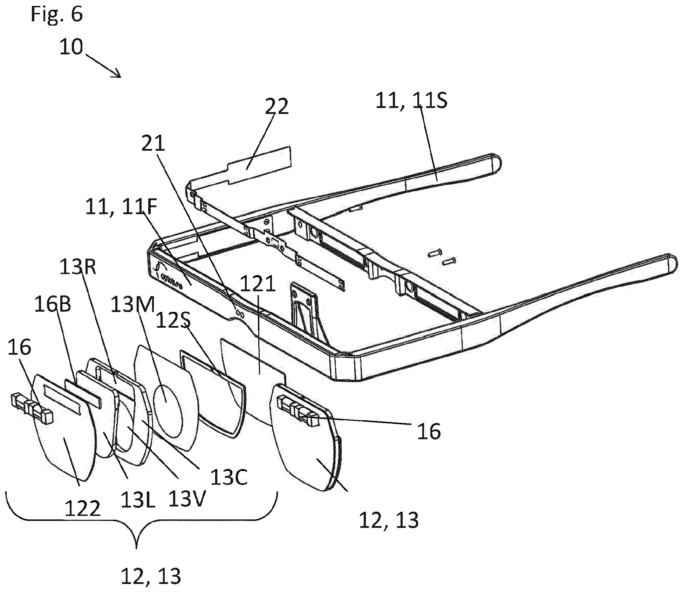

In Fig. 5 a different embodiment of the invention is shown. Fig. 6 shows the embodiment of Fig. 5 in an exploded view, while the exploded optical assembly 12 is also shown in the assembled state.

The spectacles 10 comprise a frame member 11 that does not have a back portion but only two arms 11F extending sideways along the head. Battery, radio module and control circuit 22 are completely integrated in the frame member 11 such that they are invisible from the outside. The distance between the optical assemblies 12 cannot be adjusted in this embodiment.

Furthermore, the actuators 16 for the focus-tunable lenses 13 are electro permanent actuators with a tunable electroporate magnet that allows its magnetic fields to be adjusted such that a varying adjustment force is generated for adjusting the focal length of the focus tunable lenses 13. Said force is transmitted to a pusher element 16B that can be pushed inward or outward of a liquid-filled reservoir 13R connected to the container volume 13V of the membrane-based focus-tunable lens, such that a pressure can be adjusted to the liquid 13L inside the container volume 13V.

As can be further seen in Fig. 5, the focus-tunable lens 13 is completely integrated in stacked glass or polymer layers of the optical assembly 12, such that an essentially transparent window is provided that resembles a conventional glass.

The optical assembly 12 comprises several layers. The first layer that is closest to the eye of the person wearing the spectacles is a cover glass 121 or a cover polymer for protecting the membrane-based focus-tunable lens 13. A spacer layer 12S provides sufficient space for the membrane 13M to bulge outwards the container 13C of the lens 13. The next layer comprises the elastic deformable membrane 13M of the liquid lens 13 that covers a reservoir layer laterally enclosing the container volume and the liquid 13L inside the container volume 13V. A cover layer 122 that is arranged on the outwards facing side of the optical assembly 12 comprises the actuator 16 and the pusher element 16B, wherein the pusher 16B is in direct contact with the liquid 13L in the reservoir. The outer cover layer 122 seals the liquid lens 13.

In addition to the previous embodiments shown in Figs. 1 to 4, the embodiment shown in Fig. 5 and 6 comprises a distance sensor 21 arranged at the bridge portion of the frame member 11. It is obvious that also the embodiments in Fig. 1 to 4 can comprise a distance sensor, while the embodiments shown in Figs. 5 and 6 can comprise an image sensor for recording the eyes.

The distance sensor 21 is for determining a distance between an object in front of the spectacles 10. The data acquired with the distance sensor 21 can be used by the external computer 15 to adjust the focal length of the focus-tunable lenses 13 in the optical assemblies 12. The distance data can also be used to provide a feedback to a user of the eye training system 1 to position the object, which can be the external computer 15or its display 15i, further away or closer to the user's eyes.

The external computer 15 can provide training sequences in form of data transmitted to the spectacles 10, wherein the training sequences for example comprise a temporal sequence of focal lengths that are adjusted at the spectacles 10.

Moreover, the spectacles 10 can be in radio communication with the external computer 15 such that the distance data acquired by the distance sensor 21 can be transmitted to the external computer 15, for example using Wi-Fi or another NFC protocol, such as Bluetooth.

The eye training and particularly the sequence of focal length, astigmatism or prism to be adjusted at the spectacles 10 can be comprised in a computer program that when executed on the external computer 15 causes the computer 15 to transmit data configured to adjust the focal length of the focus-tunable lenses 13 of the spectacles 10 according to the instructions comprised in the computer program.

The eye training system 1 according to the invention allows for an automated and less complex eye training to be performed.

## Claims

1. An eye training system (1) with the spectacles (10) that comprise at least the following components:
- A frame member (11) configured to keep the spectacles (10) on the head of a person wearing the spectacles (10),
- two optical assemblies (12) arranged at the frame member (11), wherein the optical assemblies (12) are arranged such at the frame member (11) that when the spectacles (10) are worn on the head of the person said optical assemblies (12) are in front of the eyes of the person, wherein each optical assembly (12) comprises a focus-tunable lens (13) with an adjustable focal length,
- a control circuit (22) comprising a processor, wherein the control circuit is configured to control the focal lengths of the focus-tunable lenses (13) in response to data (200) received from an external computer or provided by the processor.

2. The eye training system (1) according to claim 1, wherein the eye training system (1) further comprises the external computer (15), wherein the computer (15) is configured or comprises means to wireless transmit the data (200) to the spectacles (10).

3. The eye training system (1) according to claim 1 or 2, wherein at least one of optical assemblies (12) comprises a shutter (17) configured to alter a transmission of the optical assembly (12), particularly wherein the shutter (17) is configured to adopt a first state and a second state, wherein in the first state the corresponding optical assembly (12) is transparent, wherein in the second state the corresponding optical assembly (12) is optically shut, particularly wherein the shutter (17) is a mechanical shutter, and wherein the shutter (17) is controlled by the control circuit (22) particularly with an actuator arranged at the shutter (17), particularly wherein the data (200) is configured to control the shutter (17) via the control circuit (22).

4. The eye training system (1) according to one of the preceding claims, wherein at least one optical assembly (12) comprises a first adjustable optical polarizer (18) configured to adjust the polarization of light transmitted by the optical assembly (12).

5. The eye training system (1) according to claim 4, wherein at least one of the optical assemblies (12) comprises a second particularly adjustable optical polarizer, wherein the first (18) and the second polarizer form the shutter (17).

6. The eye training system according to any of the preceding claims, wherein each of the focus-tunable lenses (13) is a membrane-based liquid lens, wherein the membrane-based liquid lens (13) comprises a container (13C) that is transparent at least along an optical axis (100) of the optical assembly (12), the container (13C) comprising a first and a second face (131, 132) arranged essentially opposite of each other, wherein the container (13C) comprises a transparent liquid (13L) between the first and the second face (131, 132) and wherein at least the first or the second face (131, 132) of said container comprises a transparent elastically deformable membrane (13M) for adjusting the focal strength of the focus-tunable lens (13).

7. The eye training system according to claim 6, wherein the membrane-based focus-tunable lens (13) is configured to compensate for coma, particularly for coma induced by gravity.

8. The eye training system according to any of the preceding claims, wherein the spectacles (10) comprise an actuator system (16) configured and arranged to adjust the focal lengths of the focus-tunable lenses (13) of the optical assemblies (12), particularly wherein the actuator system (16) comprises an actuator for each optical assembly (12), wherein the actuator system (16) comprises at least one of:
- An electromagnetic actuator, such as a voice coil actuator, comprising an electromagnet or an electro permanent magnet;
- A piezoelectric actuator or a piezo motor;
- A stepper motor;
- A magneto strictive actuator;
- An electrostatic actuator;
- An electroactive polymer actuator.

9. The eye training system (1) according to any of the preceding claims, wherein the spectacles (10) comprise an adjustment assembly (23) for adjusting a distance between the optical assemblies (12).

10. The eye training system (1) according to any of the preceding claims, wherein the spectacles (10) comprise a distance sensor (21) configured to measure a distance to an object in front of the spectacles (10).

11. The eye training system (1) according to any of the preceding claims, wherein the focus-tunable lenses (13) are comprised in a glass or a transparent polymer laterally surrounding the focus-tunable lens (13).

12. The eye training system (1) according to any of the preceding claims, wherein the spectacles (10), particularly each optical assembly (12), comprise an imaging device (20) such as a camera and/or an illumination source, arranged such on the spectacles (10) that the imaging device (20) can record an eye of a person wearing the spectacles (10).

13. The eye training system (1) according to any of the preceding claims, wherein each focus-tunable lens (13) is configured to also adjust for astigmatism.

14. Computer program for controlling the adjustable focal length of the spectacles (10) of the eye training system (1) according to one of the claims 1 to 13, wherein the computer program comprises computer program code that when executed on the external computer (15) and/or on the processor causes the external computer (15) to transmit data to the spectacles (10) and/or causes the processor to provide data (200) to the control circuit that cause the optical assemblies (12) to adjust the focal length of the focus-tunable lenses (13), the polarization and/or the transmission of the optical assemblies (12), particularly according to a predefined sequence stored in the computer program.

15. Method for performing an eye training with data recorded from the eye training system (1) according to one of the previous claims, wherein the recorded data particularly comprise data recorded with the imaging device according to claim 16, particularly wherein the recorded data are received and evaluated by the external computer (15) and/or the processor, wherein in response to the
recorded data, the external computer (15) and/or the processor generates and
transmits data (200) to the optical assemblies (12) such as to adjust at least one of:
- A focal length, a cylinder or a prism of at least one focus-adjustable lens (13),
- A shutter state of at least one optical assembly (12),
- A polarizer state of the first and/or second polarizer (18) of at least one optical assembly (12).
